# EUROPÄISCHE PATENTSCHRIFT

(11) **EP 3 753 875 B1**
(45) Veröffentlichungstag und Bekanntmachung des Hinweises auf die Patenterteilung: **14.02.2024**
(21) Anmeldenummer: 20167039.5
(22) Anmeldetag: 31.03.2020
(51) Int. Cl.: B65G 29/00, B65G 47/86, B65G 54/02, B67C 3/22, B67C 7/00

(54) **VORRICHTUNG UND VERFAHREN ZUM EINBRINGEN EINES SCHUTZGASES IN BEHÄLTER**
DEVICE AND METHOD FOR INSERTING A REPLACEMENT REDUCTION AGENT INTO A BLAST FURNACE
DISPOSITIF ET PROCÉDÉ DE MISE D'UN GAZ PROTECTEUR DANS UN RÉCIPIENT

(30) Priorität: 24.05.2019 DE 102019207654
(43) Veröffentlichungstag der Anmeldung: 23.12.2020
(73) Patentinhaber: KRONES AG, 93073 Neutraubling (DE)
(72) Erfinder: KNIELING, Erwin, 93073 Neutraubling (DE)
(74) Vertreter: Grünecker Patent- und Rechtsanwälte PartG mbB

(56) Entgegenhaltungen:
- DE-A1- 10 040 531
- DE-A1-102014 102 630
- DE-A1-102014 226 965
- DE-A1-102016 111 357
- DE-A1-102017 201 310
- DE-U1- 29 906 070

## Beschreibung

### Gebiet der Erfindung

Die vorliegende Erfindung betrifft eine Vorrichtung und ein Verfahren zum Einbringen eines Schutzgases in einen Kopfraum von mit einem flüssigen Lebensmittel befüllten Behältern sowie eine Behälterbehandlungsanlage mit einer solchen Vorrichtung. Dabei kann das Schutzgas auch in flüssiger oder fester Form in den Kopfraum eingebracht werden und erst im Kopfraum in den gasförmigen Zustand übergehen.

### Stand der Technik

In der Getränke verarbeitenden Industrie sind die flüssigen Lebensmittel, insbesondere Getränke, häufig sauerstoffempfindlich. Ein prominentes Beispiel ist Bier, bei dem zum Schutz vor negativen Einflüssen von Sauerstoff auf Haltbarkeit, Geschmack und Qualität der im Kopfraum befüllter Flaschen vorhandene Restsauerstoff vor dem Verschließen der Flaschen durch ein Schutzgas, beispielsweise Stickstoff oder Kohlendioxid, verdrängt wird. Weitere Beispiele sind Fruchtsäfte, Smoothies und Milch. Auch bei Dosen, Getränkekartons und anderen Behältern für flüssige Lebensmittel wird zum Schutz sauerstoffempfindlicher Produkte im Allgemeinen ein Schutzgas in den Behälter eingebracht, bevor dieser verschlossen wird.

Hier und im Folgenden umfasst der Begriff Schutzgas auch solche Stoffe, die im flüssigen oder festen Aggregatszustand in den Kopfraum eingebracht werden und erst im Kopfraum in den gasförmigen Aggregatzustand übergehen. Beispiele sind Stickstoff, welcher als Flüssigstickstoff in die Behälter eingespritzt werden kann, und Kohlendioxid, welches in fester Form in die Behälter eingebracht werden kann.

Neben der Reduzierung des Sauerstoffanteils durch das Schutzgas bzw. die Schutzflüssigkeit wird das Verfahren auch dazu verwendet, im Kopfraum durch das Einspritzen von beispielsweise Flüssigstickstoff einen Überdruck aufzubauen, um die Behälter (PET Flaschen, Dosen) in ihrer Form zu stabilisieren. Durch die Volumenzunahme des verdampfenden Stickstoffs wird nach dem Verschließen der Flasche ein Überdruck in der Flasche aufgebaut. Dies wird zum Beispiel bei der drucklosen Abfüllung von stillem Wasser, Eistee usw. angewendet, um die Flaschen zu stabilisieren, damit diese später auf einer Palette gestapelt werden können.

Zum Einbringen des Schutzgases werden die Behälter im Allgemeinen, nachdem sie in einer Füllmaschine mit dem jeweiligen Produkt befüllt wurden, einer Einspritzvorrichtung für das Schutzgas zugeführt, bevor sie anschließend in einem Verschließer mit einem entsprechenden Verschlusselement, beispielsweise einem Schraubverschluss, einem Kronkorken, einem Korken, oder dergleichen verschlossen werden.

Dabei wird das Schutzgas von der Einspritzvorrichtung, beispielsweise einer mit einer entsprechenden Medienversorgung verbundenen Einspritzdüse, als kontinuierlicher Strahl oder getaktet abgegeben. Die Einspritzvorrichtung kann dabei am Füller im Nachgang zur Abfüllung, am Verschließer vor dem Verschließvorgang oder an einer Transfervorrichtung, beispielsweise einem Transferstern, zwischen Füller und Verschließer angeordnet werden. In allen Fällen werden die Behälter mit einer durch den gewünschten Durchsatz vorgegebenen Geschwindigkeit bzw. Taktfrequenz an der Einspritzvorrichtung vorbeigeführt bzw. dieser zugeführt.

Bei höheren Leistungen von 30000 Flaschen pro Stunde oder mehr ist eine Taktung meist nicht mehr sinnvoll durchzuführen. In diesem Fall werden die Behälter durch einen kontinuierlichen Strahl von Schutzgas, beispielsweise von Stickstoff, geführt, wobei die Menge von pro Zeiteinheit abgegebenem Schutzgas entsprechend angepasst werden muss, um ein ausreichendes Verdrängen des Restgases aus dem Kopfraum der Behälter zu garantieren. Bei einem kontinuierlichen Strahl geht somit viel Schutzgas an den Behältern vorbei und somit verloren. Darüber hinaus können hierdurch Vereisungen an Maschinenbauteilen auftreten, beispielsweise wenn flüssiger Stickstoff als Schutzgas verwendet wird. Um solche Vereisungen zu vermeiden, werden aktuell zusätzliche Wasserdüsen zur Besprühung der betroffenen Bauteile verbaut.

Die bekannten Vorrichtungen zum Einbringen von Schutzgas in Behälter für flüssige Lebensmittel sind somit entweder in ihrer Leistung limitiert oder sie führen zu einem hohen Medienverbrauch an Schutzgas und Wasser.

Die DE 10 2016 111357 A1 offenbart eine Vorrichtung zum Transport von Objekten.

Die DE 299 06 070 U1 offenbart eine Flaschenabfüllanlage mit Inertisierung.

Die DE 10 2014 102630 A1 offenbart eine Vorrichtung und ein Verfahren zum Transport von Behältern innerhalb von Isolatormaschinen.

Der vorliegenden Erfindung liegt somit die Aufgabe zugrunde, eine Vorrichtung und ein Verfahren zum Einbringen von Schutzgas in mit flüssigen Lebensmitteln befüllte Behälter zur Verfügung zu stellen, die einen hohen Durchsatz an Behältern ermöglichen und gleichzeitig den Verbrauch an Schutzgas und Wasser reduzieren. Ebenso sollen Vereisungen an Maschinenbauteilen durch das Schutzgas vermieden werden. Ganz allgemein liegt der vorliegenden Erfindung die Aufgabe zugrunde, die Herstellungskosten in der Getränke verarbeitenden Industrie zu senken und gleichzeitig die Produktivität der zugehörigen Behälterbehandlungsanlagen zu erhöhen.

### Beschreibung der Erfindung

Die oben genannten Aufgaben werden gelöst durch eine Vorrichtung zum Einbringen eines Schutzgases in Behälter, insbesondere in Flaschen, mit einem Transportsystem mit einer geschlossenen Transportbahn, welches dazu ausgebildet ist, die Behälter von einer Aufnahmestelle zu einer Abgabestelle zu transportieren, und einer Einspritzvorrichtung, welche derart an der Transportbahn angeordnet und ausgebildet ist, dass damit das Schutzgas beim Transport der Behälter von der Aufnahmestelle zur Abgabestelle in die Behälter eingebracht werden kann, wobei das Transportsystem zumindest zwischen der Aufnahmestelle und der Abgabestelle mit einem Langstator-Linearmotorantrieb zum einzeln steuerbaren Bewegen einer Vielzahl von Transportelementen für die Behälter entlang der Transportbahn ausgebildet ist.

Erfindungsgemäß weist das Transportsystem somit eine Vielzahl von einzeln steuerbaren Transportelementen auf, die an der Transportbahn bewegbar gelagert sind. Dazu kann die Transportbahn wenigstens ein Führungselement, beispielsweise eine Führungsschiene aufweisen, an dem die Transportelemente, beispielsweise über Rollen und/oder Wälzlager und/oder Gleitlager, gelagert sind. Die Transportelemente werden dabei mit individuellen Zeit-Weg-Profilen mittels wenigstens eines Langstators des Linearmotorantriebs entlang der Transportbahn bewegt. Dies kann mit der weiter unten erwähnten Steuer- und/oder Regeleinheit durch entsprechendes Ansteuern der Elektromagnete des Transportsystems erfolgen.

Die Transportbahn kann eine beliebige geschlossene Form aufweisen und insbesondere im Wesentlichen kreisrund sein. Dabei ist eine im Wesentlichen kreisrunde Form der Transportbahn als kreisrund innerhalb der Fertigungstoleranzen zu verstehen. Die Transportbahn kann darüber hinaus derart ausgebildet sein, dass die Bewegung der Transportelemente in einer Ebene erfolgt. Die geschlossene Form der Transportbahn schließt jedoch nicht aus, dass die Transportbahn auch eine oder mehrere Verzweigungen in Form von Weichen umfasst, die das Aus- bzw. Einschleusen einzelner Transportelemente ermöglichen.

Die Transportelemente dienen dem Transport von Behältern und können jeweils mit einem Behälter beladen sein. Hierzu können die Transportelemente entsprechend ausgebildete Halte- bzw. Greifelemente aufweisen. Bei entsprechender Ausbildung können die Transportelemente jedoch auch zwei oder mehr Behälter bzw. Gebinde aus zwei oder mehr Behältern aufnehmen.

Behälter sind insbesondere Getränkeflaschen, aber auch andere Behälter für flüssige Lebensmittel, wie z. B. Dosen, Kunststoff- oder Glasflaschen oder andere Glasbehälter mit Deckel, Verpackungen auf der Basis von Karton oder Verbundstoffen, Tetrapack oder Ähnliches.

Transportsysteme mit Langstator-Linearmotorantrieb sind im Stand der Technik hinreichend bekannt, sodass hierauf eine detaillierte Beschreibung verzichtet wird. Ein solches Transportsystem mit Linearmotorantrieb weist eine Vielzahl von Transportelementen auf, die als Läufer, Puck, Schlitten, Shuttle oder dergleichen ausgebildet sein können, die durch Wechselwirkung mit wenigstens einem als Langstator ausgebildeten Linearmotorstrang des Linearmotors entlang der Transportbahn bewegt werden können. Die Transportelemente können dabei über eine Steuer- und/oder Regeleinheit individuell gesteuert werden, wobei jedes Transportelement je nach Bedarf an der Transportbahn beschleunigt, abgebremst, mit konstanter Geschwindigkeit bewegt oder auch zeitweise ganz angehalten werden kann. Aufgrund der individuellen Steuerbarkeit der Transportelemente ergibt sich ein variables Bewegungsprofil jedes einzelnen Transportelements.

Der Vortrieb der Transportelemente entlang der Transportbahn erfolgt beim Linearmotorantrieb bekanntlich durch magnetische Wechselwirkung zwischen mindestens einem Sekundärteil des Transportelements und dem wenigstens einen Langstator des Langstator-Linearmotors. Das Sekundärteil eines Transportelements bezeichnet dabei die Untereinheit des Transportelements, auf welche durch magnetische Wechselwirkung mit entsprechenden Wechselwirkungselementen des Langstator-Linearmotors eine Kraft zum Bewegen des Transportelements ausgeübt wird. Zum gezielten Bewegen der Transportelemente kann der Langstator-Linearmotor eine Vielzahl entlang des jeweiligen Langstators angeordneter elektrischer Wicklungen in Form von einzeln oder blockweise ansteuerbaren Elektromagneten aufweisen. Hierbei sind auch komplexere Ausführungen, zum Beispiel mittels einer Halbachanordnung der Elektromagnete zur Verstärkung des magnetischen Flusses auf der dem Sekundärteil des Transportelements zugewandten Seite, denkbar.

Zur magnetischen Wechselwirkung mit dem wenigstens einen Langstator ist häufig wenigstens eine Sequenz, d. h. Abfolge in Längsrichtung des Transportelements, von im Allgemeinen benachbarten Permanentmagneten und/oder Elektromagneten, insbesondere nicht schaltenden Elektromagneten, abwechselnder Polung an dem Sekundärteil angebracht, welches beispielsweise in Form einer Trägerplatte ausgebildet sein kann. Je nach Ausbildung und Anordnung dieser Magnete, und je nachdem, ob ein einseitiger oder ein beidseitiger Linearmotorantrieb verwendet wird, können die Transportelemente auch zwei oder mehr Sekundärteile aufweisen. Beispielsweise kann für jeden Langstator ein eigenes Sekundärteil vorgesehen sein. Zur Vereinfachung der Darstellung werden hier und im Folgenden ohne Einschränkung Transportelemente mit genau einem Sekundärteil angenommen.

Der wenigstens eine Langstator des Langstator-Linearmotors kann insbesondere als synchroner Linearmotor ausgebildet sein, da beim synchronen Linearmotor im Allgemeinen kein Schlupf auftritt, sodass das Bewegen eines Transportelements mit einem vorgegebenen Bewegungsprofil leichter von der Steuer- und/oder Regeleinheit durchgeführt werden kann. In einer alternativen Ausführung kann der wenigstens eine Langstator jedoch auch als asynchroner Linearmotor ausgebildet sein, wobei das Transportelement ein elektrisch leitendes Element, z. B. in Form einer metallischen Platte, an welcher zusätzlich Permanentmagnete und/oder nicht schaltende Elektromagnete angebracht sein können, für die Induktion durch den asynchronen Linearmotor aufweisen kann. Für die magnetische Wechselwirkung mit dem wenigstens einen Langstator können die Transportelemente wie erwähnt jeweils über ein Sekundärteil verfügen, welches mit wenigstens einer Sequenz von Permanentmagneten und/oder Elektromagneten, im Folgenden kurz als Magneten des Sekundärteils bezeichnet, ausgestattet ist, wobei das Sekundärteil derart ausgebildet ist, dass das jeweilige Transportelement durch magnetische Wechselwirkung mit dem wenigstens einen Langstator der Transportbahn entlang der Transportbahn bewegt werden kann.

Das Transportelement kann als passives Transportelement ausgebildet sein, welches über ein Sekundärteil mit mindestens einer Sequenz von Permanentmagneten und/oder nicht schaltenden Elektromagneten durch Wechselwirkung mit den von den einzeln ansteuerbaren Elektromagneten des Linearmotors erzeugten elektromagnetischen Wechselfeldern bewegt wird. Ein nicht schaltender Elektromagnet ist dabei derart mit einer Stromversorgung und/oder einer Steuer- und/oder Regeleinheit des Transportsystems verbunden, dass er stets in derselben Richtung von einem, vorzugsweise regelbaren, elektrischen Strom durchflossen wird. Auch ein Transportelement mit einem Sekundärteil mit einem elektrischen leitenden Element für die Induktion durch einen asynchronen Linearmotor wird als passives Transportelement bezeichnet. Alternativ kann das Transportelement als aktives Transportelement mit elektrischen Wicklungen, d. h. einer Sequenz von schaltenden Elektromagneten, versehen sein, welche die für den Antrieb notwendigen magnetischen Wechselfelder aufbringen können. Entsprechend wird der wenigstens eine Langstator der Transportbahn in dieser Weiterbildung mit Permanentmagneten bzw. nicht schaltenden Elektromagneten versehen. Der Einfachheit halber wird im Folgenden lediglich auf die Ausbildung des Langstator-Linearmotorantriebs mit passiven Transportelementen eingegangen. Wenn nicht ausdrücklich anders erwähnt, ist die Erfindung jedoch durch entsprechende Steuerung der Elektromagneten des Sekundärteils auch auf aktive Transportelemente anwendbar.

Um ein (passives) Transportelement mit einem gewünschten Bewegungsprofil entlang der Transportbahn zu bewegen, steuert die Steuer- und/oder Regeleinheit wie im Stand der Technik allgemein bekannt die Spulen des Langstators einzeln oder blockweise über einen entsprechenden Spannungs- bzw. Stromimpuls an. Um eine für das Bewegungsprofil erforderliche Kraft, zum Beschleunigen des Transportelements, zum Überwinden einer Reibungskraft bei konstanter Fahrt, oder zum Abbremsen des Transportelements, durch die magnetische Wechselwirkung zu erzeugen, werden die Spulen im Bereich des Transportelements phasengerecht mit einer entsprechenden Lastspannung belegt bzw. einem entsprechenden Laststrom bestromt.

Das Transportsystem, insbesondere die Transportbahn, umfasst erfindungsgemäß wenigstens einen der oben beschriebenen Langstatoren. Dabei ist der wenigstens eine Langstator im Wesentlichen parallel zu der Transportbahn angeordnet.

Des Weiteren kann die Transportbahn wie erwähnt wenigstens ein Führungselement, beispielsweise eine Führungsschiene, aufweisen, an dem die Transportelemente mittels eines oder mehrerer Lagerelemente bewegbar gelagert sind. Insbesondere kann die Transportbahn zwei parallel geführte Führungsschienen in Form eines Doppelschienensystems, wie z. B. bei Eisenbahngleisen, aufweisen. Der oder die Langstatoren können dabei parallel zu den jeweiligen Führungsschienen, beispielsweise mittig zwischen diesen, angeordnet sein. Eine Vielzahl von Ausführungen der Führungselemente und Langstatoren ist im Stand der Technik bekannt.

Die Form und der Querschnitt der Führungselemente sind dabei beliebig und lediglich durch die Ausführung der Transportelemente sowie der Lagerelemente der Transportelemente, mit welchen die Transportelemente bewegbar an den Führungselementen gelagert sind, bestimmt. Z. B. kann eine Führungsschiene einen Führungskanal, in welchem ein Führungsstift der Transportelemente geführt wird, und/oder einen Spurkranz aufweisen, auf welchem eine oder mehrere geeignet angeordnete Führungsrollen der Transportelemente abrollen. Eine Vielzahl alternativer Ausführungsformen, z. B. mittels eines Gleitlagers, ist hier vorstellbar. Durch das Bereitstellen von Führungsschienen an der Transportbahn kann eine reibungsarme Bewegung der Transportelemente entlang der Transportbahn ermöglicht werden. Darüber hinaus können die Transportbahn und/oder die Führungselemente über eine Lauffläche verfügen, auf welcher entsprechende Stützelemente, z. B. Laufrollen, abrollen bzw. gleiten können.

Erfindungsgemäß ist das Transportsystem dazu ausgebildet, die Behälter von einer Aufnahmestelle an der Transportbahn zu einer Abgabestelle an der Transportbahn zu transportieren. Dabei werden die Behälter von den Transportelementen mittels der oben erwähnten Greif- oder Halteelemente an der Aufnahmestelle, beispielsweise von einer Füllmaschine oder einem weiteren Transportsystem wie einem Transferstern, übernommen, und an der Abgabestelle, beispielsweise an einen Verschließer oder ein weiteres Transportsystem wie einen Transferstern, übergeben.

Erfindungsgemäß ist darüber hinaus eine Einspritzvorrichtung an einer Stelle der Transportbahn zwischen Aufnahmestelle und Abgabestelle angeordnet, die dazu ausgebildet ist, das Schutzgas in die Behälter einzubringen. Im Allgemeinen wird die Einspritzvorrichtung oberhalb der Transportbahn angeordnet sein, sodass das Schutzgas von oben in einen Mündungsbereich der Behälter eingespritzt werden kann. Je nach Ausbildung und Anordnung der Behälter beim Transport ist jedoch auch eine entsprechend angepasste Anordnung der Einspritzvorrichtung denkbar.

Erfindungsgemäß ist das Transportsystem zumindest zwischen der Aufnahmestelle und der Abgabestelle der Transportbahn mit einem Langstator-Linearmotorantrieb ausgebildet. Andere Bereiche der Transportbahn können mit einem alternativen Antrieb für die Transportelemente, beispielsweise einem Kettenantrieb oder Bandantrieb, ausgebildet sein. Mit einem solchen Antrieb können die Transportelemente kostengünstig von der Abgabestelle zur Aufnahmestelle entlang eines Rücktrums der Transportbahn zurückgeführt werden. Alternativ kann das Transportsystem entlang der gesamten Transportbahn mit einem Langstator-Linearmotorantrieb, wie er oben beschrieben ist, ausgebildet sein. In dieser Weiterbildung werden die Transportelemente somit mittels des Linearmotorantriebs von der Abgabestelle zur Aufnahmestelle zurückgeführt.

Erfindungsgemäß weist die Einspritzvorrichtung wenigstens eine Einspritzdüse zum Einspritzen des Schutzgases in eine Öffnung der Behälter auf, wobei des Weiteren eine Steuer- und/oder Regeleinheit vorgesehen ist, die dazu ausgebildet ist, die Transportelemente mit reduzierter Geschwindigkeit an der wenigstens einen Einspritzdüse vorbeizubewegen oder zeitweise an der wenigstens einen Einspritzdüse zu stoppen. Neben der wenigstens einen Einspritzdüse kann die Einspritzvorrichtung einen Vorratsbehälter für das Schutzgas und/oder Zuleitungen für das Schutzgas und weitere übliche Komponenten wie eine Pumpe und/oder Ventile aufweisen. Über eine regelbare Pumpe und/oder Regelventile kann die Rate, mit der das Schutzgas von der Einspritzdüse abgegeben wird, geregelt werden. Die Regelung kann durch die oben erwähnte Steuer- und/oder Regeleinheit erfolgen, oder durch eine separate Regeleinheit der Einspritzvorrichtung. Dabei kann die Rate bzw. der Volumenstrom des Schutzgases in Abhängigkeit von dem Behältertyp, dem Kopfraumvolumen, d.h. dem in dem befüllten Behälter oberhalb des Flüssigkeitsspiegels verbleibenden Volumen, und/oder dem Durchsatz an Behältern geregelt werden. Die Regeleinheit kann als speicherprogrammierbare Steuerung ausgebildet sein, wobei die Regelung in der Art einer Sortenverwaltung erfolgen kann.

Die Steuer- und/oder Regeleinheit des Transportsystems ist gemäß dieser Weiterbildung dazu ausgebildet, die Transportelemente mit einer gegenüber ihrer mittleren Geschwindigkeit zwischen Aufnahmestelle und Abgabestelle entlang der Transportbahn reduzierten Geschwindigkeit an der wenigstens einen Einspritzdüse vorbeizubewegen oder zeitweise an der wenigstens einen Einspritzdüse zu stoppen. Dadurch wird die Verweildauer der Transportelemente und damit der von den Transportelementen transportierten Behälter im Bereich der Einspritzdüse verlängert. Zum Ausgleich bewegen sich die Transportelemente durch die Steuer- und/oder Regeleinheit gesteuert entlang anderer Teilstrecken der Transportbahn zwischen Aufnahmestelle und Abgabestelle mit einer erhöhten Geschwindigkeit. Die Steuer- und/oder Regeleinheit gibt hierzu entsprechende Zeit-Weg-Profile für die Bewegung der Transportelemente vor.

Dabei kann die reduzierte Geschwindigkeit bzw. die Dauer, für die die Transportelemente an der Einspritzdüse gestoppt werden, von der Steuer- und/oder Regeleinheit in Abhängigkeit von dem Behältertyp, dem Volumenstrom an Schutzgas, dem Kopfraumvolumen und/oder dem gewünschten Durchsatz geregelt werden.

Gemäß einer Weiterbildung kann die Einspritzdüse zum kontinuierlichen Betrieb ausgebildet sein. In dieser Weiterbildung gibt die wenigstens eine Einspritzdüse einen kontinuierlichen Strahl an Schutzgas ab. Somit tritt in jedem Fall ein Teil des abgegebenen Schutzgases an den Behältern vorbei. Durch das oben beschriebene Vorbeiführen der Behälter mit reduzierter Geschwindigkeit bzw. das vorübergehende Anhalten der Behälter an der Einspritzdüse erhöht sich jedoch die Verweildauer der Behälter an der Einspritzdüse, d. h. die Dauer, während der Schutzgas durch die Öffnung der Behälter in die Behälter eintritt, gegenüber einem Transportsystem mit konstanter Geschwindigkeit der Behälter, beispielsweise einem herkömmlichen Transferstern, bei dem die Behälter mit der zuvor erwähnten mittleren Geschwindigkeit entlang der Transportbahn bewegt werden.

Aufgrund der erhöhten Verweildauer kann bei gleicher Anforderung an die in die Behälter einzubringende Menge an Schutzgas jedoch der Volumenstrom an Schutzgas, der von der Einspritzdüse abgegeben wird, reduziert werden. Hierdurch reduzieren sich auch die Verluste an Schutzgas bei kontinuierlicher Abgabe, wodurch auch möglicherweise auftretende Vereisungen von Maschinenbauteilen reduziert werden. Somit ergibt sich auch eine Einsparung an Wasser, das zur Enteisung der Maschinenbauteile eingesetzt wird.

Gemäß einer alternativen Weiterbildung kann die Einspritzdüse zum getakteten Betrieb ausgebildet sein. Wie oben erwähnt kann die Taktung dabei von derselben Steuer- und/oder Regeleinheit gesteuert werden, die auch die Bewegung der Transportelemente mittels des Langstator-Linearmotorantriebs steuert. Auf diese Weise kann die Einspritzdüse gezielt aktiviert werden, wenn ein Transportelement mit einem Behälter an der Einspritzdüse platziert ist. Ein Verlust an Schutzgas durch fehlerhafte Abstimmung zwischen der Taktung der Einspritzdüse und der Bewegung der Behälter kann dadurch vermieden werden. Die Verweildauer der Transportelemente mit den Behältern an der Einspritzdüse und die Rate, mit der die Einspritzdüse das Schutzgas abgibt, können in Abhängigkeit von dem Behältertyp und/oder dem Kopfraumvolumen aufeinander abgestimmt werden. Dadurch kann der Verbrauch an Schutzgas reduziert werden.

Da die Transportelemente aufgrund des Langstator-Linearmotorantriebs unabhängig voneinander bewegt werden können, kann die Taktung gegenüber herkömmlichen Transportsystemen erhöht werden. Beispielsweise kann durch beschleunigtes Bewegen eines nachfolgenden Transportelements im Vorlauf zur Einspritzdüse bewirkt werden, dass das nachfolgende Transportelement möglichst nahe an der Einspritzdüse bereitsteht, wenn der Einspritzvorgang für das vorangehende Transportelement beendet wird. Auf diese Weise wird die Zeit zum Austausch der Behälter an der Einspritzdüse reduziert, wodurch die Taktung und damit der Durchsatz an Behältern erhöht werden kann.

Gemäß einer speziellen Weiterbildung kann eine Vielzahl von Einspritzdüsen zum gleichzeitigen Einspritzen des Schutzgases in eine entsprechende Anzahl von Behältern vorgesehen sein, wobei die Behälter mittels der Steuer- und/oder Regeleinheit, insbesondere durch Ansteuern einer entsprechenden Anzahl von Transportelementen, gruppenweise an der Vielzahl von Einspritzdüsen angeordnet werden. Gemäß dieser Weiterbildung umfasst die Einspritzvorrichtung somit mehrere Einspritzdüsen, die in einer Reihe oder einer Matrix angeordnet sein können, je nachdem wie die Behälter von den Transportelementen transportiert werden. Dabei kann die Reihe gekrümmt sein bzw. die Matrix verformt sein, um dem Verlauf der Transportbahn zu folgen.

Transportiert beispielsweise jedes Transportelement nur einen Behälter, so können die Einspritzdüsen derart in einer Reihe angeordnet werden, dass eine entsprechend große Anzahl von Behältern, die von den Transportelementen an den Einspritzdüsen vorbeibewegt werden bzw. an diesen platziert werden, gleichzeitig mit Schutzgas beaufschlagt wird. Hierzu kann die Steuer- und/oder Regeleinheit eine Gruppe aus entsprechend vielen Transportelementen bilden, die gemeinsam mit einem durch die Anordnung der Einspritzdüsen vorgegebenen Abstand, beispielsweise einer vorübergehend reduzierten Teilung, im Bereich der Einspritzdüsen bewegt werden. Unter der Teilung bzw. dem Teilungsabstand eines Stromes von Objekten ist hier und im Folgenden der Abstand sich entsprechender Punkte aufeinanderfolgender Objekte, beispielsweise der Behälter, zu verstehen. Die Gruppe kann anschließend zur Abgabe der transportierten Behälter an der Abgabestelle wieder aufgelöst werden. Auf diese Weise lässt sich der Durchsatz der Vorrichtung zum Einbringen von Schutzgas bei getakteten Einspritzdüsen um ein Vielfaches steigern.

In dem Fall, dass jedes Transportelement nur einen Behälter transportiert, kommt zudem ein weiterer Vorteil des Langstator-Linearmotorantriebs zum Tragen. Falls beispielsweise eine der Einspritzdüsen aufgrund einer Fehlfunktion ausfällt, können die Bewegungsprofile der Transportelemente derart von der Steuer- und/oder Regeleinheit angepasst werden, dass nur an funktionsfähigen Einspritzdüsen Behälter platziert werden. Hierzu wird die Anzahl der Transportelemente in der Gruppe entsprechend reduziert, wobei an der defekten Einspritzdüse eine Lücke in der Gruppe belassen wird. Ebenso flexibel kann auf den Ausfall mehrerer Einspritzdüsen reagiert werden. Hierzu übermitteln die Einspritzdüsen bzw. deren Steuereinheit ein die Funktionsfähigkeit der Einspritzdüsen wiedergebendes Signal via Kabel oder kabellos an die Steuer- und/oder Regeleinheit des Transportsystems. Auf diese Weise kann ein unnötiger Ausschuss durch nicht korrekt mit Schutzgas beaufschlagte Behälter vermieden werden.

In dem Fall, dass jedes Transportelement selbst bereits mehrere Behälter bzw. ein Gebinde von Behältern transportiert, können die Einspritzdüsen entsprechend in einer Reihe oder einer zweidimensionalen Matrix angeordnet werden. Eine Anordnung in Reihe kann gewählt werden, wenn die von einem Transportelement transportierten Behälter ebenfalls in einer Reihe angeordnet sind und beispielsweise jeweils nur ein Transportelement an der Einspritzvorrichtung behandelt werden soll. Dabei kann die Anordnung der Einspritzdüsen auch senkrecht zur Transportbahn sein. Werden mehrere Transportelemente mit jeweils mehreren in einer Reihe senkrecht zur Transportrichtung angeordneten Behältern als Gruppe an der Einspritzvorrichtung platziert, so kann hierzu eine Anordnung der Einspritzdüsen in einer zweidimensionalen Matrix verwendet werden. Ebenso kann eine Anordnung der Einspritzdüsen in einer zweidimensionalen Matrix eingesetzt werden, wenn jedes Transportelement mehrere in einer Matrix angeordnete Behälter transportiert und ein oder mehrere Transportelemente gleichzeitig an der Einspritzvorrichtung behandelt werden.

Die Anzahl der Einspritzdüsen entspricht somit der Anzahl der Behälter in der Gruppe von gleichzeitig zu behandelnden Behälter. Die Gruppe kann dabei durch Ausbildung der Transportelemente zum Transport mehrerer Behälter und/oder durch gemeinsames Bewegen von zwei oder mehr Transportelementen gebildet werden. Entsprechend erhöht sich der Durchsatz an Behältern um ein Vielfaches.

Gemäß einer Weiterbildung kann das Schutzgas Stickstoff oder Kohlendioxid sein oder umfassen. Das Schutzgas kann insbesondere als flüssiger Stickstoff von der wenigstens einen Einspritzdüse abgegeben werden. Der Begriff Schutzgas wird in der vorliegenden Offenbarung somit ohne Einschränkung für Stoffe verwendet, die gasförmig, flüssig oder fest in die Behälter eingebracht werden, um im Kopfraum der Behälter schließlich in gasförmigem Zustand eine Schutzatmosphäre zu bilden. Dabei kann ein Phasenübergang zum gasförmigen Aggregatzustand auch erst nach dem Einbringen in die Behälter erfolgen.

Alternativ kann der Stickstoff, ebenso wie das Kohlendioxid, als Gas in die Behälter eingebracht werden. Auch eine Mischung aus Stickstoff und Kohlendioxid ist als Schutzgas denkbar. Wie oben beschrieben weist die Vorrichtung zum Einbringen des Schutzgases gemäß der vorliegenden Erfindung einen reduzierten Verbrauch an Schutzgas auf. Darüber hinaus wird bei Verwendung von flüssigem Stickstoff als Schutzgas auch der Verbrauch an Wasser zum Vermeiden der Vereisung von Maschinenbauteilen reduziert. Die Behälter können insbesondere mit einem flüssigen Lebensmittel befüllte Flaschen sein. Bei dem flüssigen Lebensmittel kann es sich insbesondere um Bier, ein Fruchtsaftgetränk oder Milch handeln.

Gemäß einer Weiterbildung kann das Transportsystem als Transferstern ausgebildet sein. In dieser Weiterbildung weisen die Transportbahn, der wenigstens eine Langstator und das wenigstens eine Führungselement eine im Wesentlichen kreisrunde Form auf. Darüber hinaus ist gemäß dieser Weiterbildung die gesamte Transportbahn mit einem Langstator-Linearmotorantrieb ausgebildet. Insbesondere sind die Transportbahn, der wenigstens eine Langstator und das wenigstens eine Führungselement gemäß dieser Weiterbildung konzentrisch um den Mittelpunkt der Transportbahn in der Bewegungsebene der Transportelemente angeordnet.

In den oben beschriebenen Weiterbildungen eines Transportsystems mit Langstator-Linearmotorantrieb kann das gewünschte Bewegungsprofil der Transportelemente durch gezieltes Ansteuern der Elektromagneten des Langstators bzw. der Transportelemente erzeugt werden. Hierzu kann insbesondere wie im Stand der Technik bekannt eine Positionserfassungsvorrichtung zum Erfassen der Position des jeweiligen Transportelements entlang der Transportbahn vorgesehen sein. Positionserfassungsvorrichtungen sind im Stand der Technik allgemein bekannt.

Beispielsweise können entlang der Transportbahn Sensoren angeordnet sein, die dazu ausgebildet sind, die Position und/oder Geschwindigkeit eines Transportelements im Bereich dieser Sensoren zu bestimmen. Dabei können die Sensoren als optischer Sensor, elektrischer Sensor, elektromagnetischer Sensor oder mechanischer Sensor ausgebildet sein, wobei zum Beispiel durch Messen einer Lichtreflexion an einem Reflektorelement des Transportelements, durch Induktion eines elektromagnetischen Signals aufgrund der Bewegung des Transportelements, durch Änderung des elektrischen Widerstandes des Sensors unter Ausnutzung eines magnetoresistiven Effekts, zum Beispiel aufgrund einer durch die Bewegung des ein magnetisches Referenzelement umfassenden Transportelements verursachten magnetischen Flussänderung, oder durch lokale Druckmessung aufgrund des Gewichts des Transportelements die Position des Transportelements bestimmt werden kann. Ein elektromagnetischer Sensor kann dabei auch als Hallsensor ausgebildet sein. Hallsensoren gestatten beispielsweise eine Lokalisierung eines Transportelements mit einer Genauigkeit von 0,2 mm bis 1 mm. Als Sensoren können ebenfalls magnetostriktive Wegaufnehmer verwendet werden, die die Position des Transportelements mithilfe der Magnetostriktion ermitteln. Dabei wird als Messelement ein Wellenleiter aus einem magnetostriktiven Material entlang der Messstrecke angeordnet, durch den ein Leiter gefädelt wird. Ein an den Transportelementen entsprechend angeordneter Permanentmagnet führt als Positionsgeber zur Magnetostriktion des Wellenleiters, die eine sich nach beiden Seiten ausbreitende, mechanische Welle erzeugt. Aus der Ausbreitung der Welle kann dabei die Position des Transportelements bestimmt werden.

Weitere mögliche Sensoren sind regelmäßig an der Transportbahn angeordnete Näherungssensoren induktiver oder kapazitiver Art, sowie als lineare bzw. Drehgeber ausgebildete Inkrementalgeber oder absolute Wertgeber. Bei Inkrementalgebern kann es erforderlich sein, dass durch eine Referenzfahrt zunächst die absolute Position der Transportelemente beim Anfahren des Transportsystems bestimmt wird. Mit induktiven Sensoren kann darüber hinaus aus der Amplitude des induzierten Strompulses bzw. Spannungspulses auf die Geschwindigkeit des Transportelements rückgeschlossen werden. Ebenso kann aus den Messdaten von Inkrementalgebern die Geschwindigkeit des Transportelements bestimmt werden.

Die von den Sensoren der Transportelemente und/oder des Langstator-Linearmotors bzw. der Transportbahn erfassten Positionen und/oder Geschwindigkeiten der Transportelemente werden über entsprechende Radioantennen oder Signalleitungen an die Steuer- und/oder Regeleinheit des Transportsystems weitergeleitet, die diese zur Steuerung bzw. Regelung des Transportsystems verarbeitet.

Vorrichtungen und Verfahren zur Positionserfassung sowie zum Ansteuern eines Langstators eines Linearmotors zur Erzeugung eines gewünschten Bewegungsprofils sind beispielsweise in der US-Patentanmeldung US 2003/0230941 A1 beschrieben. Die Bewegungsprofile der Transportelemente können dabei von der Steuer- und/oder Regeleinheit wie oben beschrieben vorgegeben werden, um die Verweildauer der transportierten Behälter an der Einspritzvorrichtung zu erhöhen.

Dabei können die Bewegungsprofile bei Bedarf angepasst werden, beispielweise wenn wie oben beschrieben eine oder mehrere der Einspritzdüsen eine Störung aufweisen. Wird die Störung behoben, so kann zu dem ursprünglichen Bewegungsprofil zurückgekehrt werden. Des Weiteren ist eine einfache Anpassung der Bewegungsprofile an einen anderen Behältertyp, ein anderes Kopfraumvolumen und/oder ein anderes Schutzgas möglich. Die entsprechenden Bewegungsprofile können dabei in Form einer Sortenverwaltung in einem Speicher einer speicherprogrammierbaren Steuerung des Transportsystems abgelegt und daraus bei Bedarf ausgelesen werden.

Die Erfindung stellt weiterhin eine Behälterbehandlungsanlage für flüssige Lebensmittel mit einer der oben beschriebenen Vorrichtungen zum Einbringen von Schutzgas zur Verfügung, wobei die Behälterbehandlungsanlage weiterhin einen Füller, insbesondere ein Füllerkarussell, zum Abfüllen eines flüssigen Lebensmittels in Behälter und einen Verschließer zum Verschließen der befüllten Behälter umfasst, und wobei die Vorrichtung zwischen Füller und Verschließer angeordnet ist.

Füller bzw. Füllmaschinen, insbesondere als Füllerkarussell, sind im Stand der Technik wohlbekannt und werden daher hier nicht weiter beschrieben. Der im Allgemeinen als Rundläufer ausgebildete Füller befüllt die Behälter mit einem flüssigen Lebensmittel und übergibt diese dann direkt oder über eine zwischengeschaltete Transfereinrichtung, beispielsweise einen Transferstern, an der Aufnahmestelle an die Transportelemente des oben beschriebenen Transportsystems.

Ebenso sind Verschließer bzw. Verschlussmaschinen zum Verschließen der befüllten Behälter im Stand der Technik wohlbekannt und werden daher hier nicht ausführlich beschrieben. Nach Einbringen des Schutzgases werden die Behälter an der Abgabestelle der oben beschriebenen Transportbahn entweder direkt oder über eine zwischengeschaltete Transfereinrichtung, beispielsweise einen Transferstern, an den Verschließer übergeben. Je nach Behältertyp werden dann vom Verschließer entsprechende Verschlüsse, beispielsweise Schraubverschlüsse, Korken, Kronkorken, Deckel oder dergleichen, auf die befüllten Behälter derart aufgebracht, dass diese dadurch luftdicht verschlossen werden.

Durch die, prozesstechnisch, zwischen Füller und Verschließer angeordnete Vorrichtung zum Einbringen eines Schutzgases in die Behälter wird somit vor dem Verschließen der Behälter ein Restsauerstoff im Kopfraum der Behälter durch das inerte Schutzgas verdrängt. Die so verschlossenen Behälter weisen eine bessere Konservierung der eingefüllten flüssigen Lebensmittel auf.

Wie an sich bekannt kann die Behälterbehandlungsanlage weitere Behälterbehandlungsmaschinen, beispielsweise eine Blasmaschine und/oder eine Etikettiermaschine aufweisen. Auch bei diesen Behälterbehandlungsmaschinen kann es sich insbesondere um Rundläufer handeln.

Durch Einsatz des oben beschriebenen Transportsystems lassen sich zudem besonders einfach und unkompliziert Formatwechsel durchführen. Darüber hinaus lässt sich mit den beschriebenen Transportsystemen mittels Linearmotors auch eine eventuell im Behälterstrom auftretende (regelmäßige) Lücke zusammenfahren. Schließlich kann aufgrund der individuellen Steuerbarkeit der Transportelemente auf die sonst üblichen Einlauf- und Auslaufsterne verzichtet werden, sodass eine direkte Übernahme bzw. Übergabe von dem Füller bzw. an den Verschließer möglich ist. Das Transportsystem kann jedoch auch mit einem zwischen Füller und Transportsystem vorgesehenen Einlaufstern und/oder einem zwischen Transportsystem und Verschließer vorgesehenen Auslaufstern eingesetzt werden.

Die oben genannten Aufgaben werden auch durch ein Verfahren zum Einbringen eines Schutzgases in Behälter, insbesondere in Flaschen, gelöst, das die folgenden Schritte umfasst: Übernahme der Behälter von einem Füller, insbesondere einem Füllerkarussell, und Transportieren der Behälter zu einem Verschließer, wobei das Schutzgas mittels einer Einspritzvorrichtung in die transportierten Behälter eingebracht wird, und wobei die Behälter zumindest im Bereich der Einspritzvorrichtung mittels einer Vielzahl einzeln steuerbarer Transportelemente transportiert werden, die von einem Langstator-Linearmotorantrieb angetrieben werden.

Hierbei können dieselben Variationen und Weiterbildungen, die oben im Zusammenhang mit der erfindungsgemäßen Vorrichtung zum Einbringen von Schutzgas in Behälter beschrieben wurden, auch auf das Verfahren zum Einbringen eines Schutzgases in die Behälter angewendet werden. Insbesondere können die Behälter direkt vom Füller mittels geeigneter Halte- oder Greifelemente der Transportelemente aufgenommen werden. Alternativ kann die Übergabe der Behälter von dem Füller an die Transportelemente über eine Transfervorrichtung, beispielsweise einen zwischengeschalteten Transferstern, indirekt erfolgen. Ebenso können die Behälter mittels der Transportelemente direkt zum Verschließer transportiert werden oder über eine zwischengeschaltete Transfervorrichtung, beispielsweise einen Transferstern, an den Verschließer übergeben werden. Der Transport der Behälter zwischen Füller und Verschließer kann über eines der oben beschriebenen Transportsysteme mit optional vor- und/oder nachgeschalteten Transfervorrichtungen, wie Transfersternen, erfolgen.

Erfindungsgemäß wird das Schutzgas mittels einer Einspritzvorrichtung in die vom Füller zum Verschließer transportierten Behälter eingebracht. Die Einspritzvorrichtung kann dabei wie oben im Detail beschrieben an einer Stelle einer Transportbahn angeordnet sein, entlang derer die Vielzahl von Transportelementen durch den entlang der Transportbahn angeordneten Langstator-Linearmotorantrieb einzeln gesteuert bewegt wird. Dabei werden die die Behälter transportierenden Transportelemente zumindest im Bereich der Einspritzvorrichtung von dem Langstator-Linearmotorantrieb angetrieben. Die Bewegung der Transportelemente kann somit im Bereich der Einspritzvorrichtung mit individuellen Zeit-Weg-Profilen erfolgen, die von einer Steuer- und/oder Regeleinheit des Transportsystems vorgegeben und bei Bedarf angepasst werden können. Der Bereich der Einspritzvorrichtung ist dabei durch den Bereich entlang der Transportbahn definiert, der sich jeweils bis 10 cm, bevorzugt bis 20 cm, von einer Einspritzdüse, bzw. von den entlang der Transportbahn äußeren Einspritzdüsen, der Einspritzvorrichtung entlang der Transportbahn erstreckt, wobei die Strecken entlang des oder der dem Behälter nächstgelegenen Führungselemente der Transportbahn bemessen werden. Gemäß einer speziellen Weiterbildung kann wie oben beschrieben die gesamte geschlossene Transportbahn, entlang derer die Transportelemente bewegt werden, mit dem Langstator-Linearmotorantrieb ausgebildet sein. Die Bewegung der Transportelemente kann somit individuell gesteuert über den Langstator-Linearmotorantrieb entlang einer geschlossenen Transportbahn erfolgen.

Dieselben Weiterbildungen und Varianten des Transportsystems, insbesondere der Transportelemente, der Transportbahn, des zumindest einen Führungselements und des zumindest einen Langstator-Linearmotorantriebs, die im Zusammenhang mit der Vorrichtung zum Einbringen von Schutzgas beschrieben wurde, können auch bei dem Verfahren zum Einbringen des Schutzgases angewendet werden.

Das Verfahren kann weiterhin das Befüllen der Behälter mittels des Füllers mit einem flüssigen Lebensmittel, die Übergabe der Behälter nach Einbringen des Schutzgases an den Verschließer und das Verschließen der Behälter mit einem Verschlusselement umfassen. Bei dem flüssigen Lebensmittel kann es sich insbesondere um Bier, ein Fruchtsaftgetränk oder Milch handeln. Das Schutzgas kann insbesondere als flüssiger Stickstoff von der Einspritzvorrichtung abgegeben werden. Alternativ kann der Stickstoff, ebenso wie das Kohlendioxid, als Gas in die Behälter eingebracht werden. Auch eine Mischung aus Stickstoff und Kohlendioxid ist als Schutzgas denkbar.

Das Befüllen der Behälter erfolgt durch den Füller bis zu einem gewünschten Füllstand. Das dabei im Kopfraum des Behälters oberhalb des Füllstands verbleibende Gas, beispielsweise Umgebungsluft, wird durch das Einbringen des Schutzgases verdrängt, sodass insbesondere ein eventuell vorliegender Restsauerstoff aus dem Kopfraum verdrängt wird. Dadurch verbessert sich die Konservierung des flüssigen Lebensmittels.

Wie oben im Detail beschrieben, werden die Transportelemente zum Einbringen des Schutzgases mit reduzierter Geschwindigkeit an der Einspritzvorrichtung vorbeibewegt oder zeitweise an der Einspritzvorrichtung gestoppt. Die Geschwindigkeit ist dabei gegenüber der mittleren Geschwindigkeit der Transportelemente entlang der Transportbahn zwischen Übernahme und Übergabe der Behälter reduziert. Entsprechend werden die Transportelemente mit einer gegenüber der mittleren Geschwindigkeit erhöhten Geschwindigkeit entlang einem anderen Teil der Transportbahn zwischen Übernahme und Übergabe der Behälter bewegt.

Beispielsweise können die Bewegungsprofile der Transportelemente derart gewählt werden, dass sich die Transportelemente bei der Übernahme der Behälter synchron mit den zu übernehmenden Behältern bewegen. Anschließend werden die Transportelemente beschleunigt und mit erhöhter Geschwindigkeit zur Einspritzvorrichtung hin bewegt. Zum Einbringen des Schutzgases in die Behälter werden die Transportelemente dann wie bereits beschrieben abgebremst bzw. vorübergehend vollständig an der Einspritzvorrichtung angehalten. Nach Passieren der Einspritzvorrichtung können die Transportelemente erneut beschleunigt und mit erhöhter Geschwindigkeit zur Abgabestelle für die Behälter bewegt werden. Zur Übergabe der Behälter können die Transportelemente synchron mit den die Behälter übernehmenden Greif- bzw. Halteelementen des Verschließers bzw. einer zwischengeschalteten Transfervorrichtung bewegt werden. Auf diese Weise wird wie oben beschrieben die Verweildauer der Behälter an der Einspritzvorrichtung gegenüber einem starren Transport, beispielsweise mit einem herkömmlichen Transferstern, verlängert, sodass der Volumenstrom, mit dem die Einspritzvorrichtung das Schutzgas abgibt, reduziert werden kann. Dadurch reduziert sich der Verbrauch an Schutzgas.

Die Dauer, für die die Transportelemente an der Einspritzvorrichtung angehalten werden, bzw. die reduzierte Geschwindigkeit kann wie oben beschrieben abhängig vom Behältertyp und/oder vom Kopfraumvolumen der befüllten Behälter und/oder dem Volumenstrom des Schutzgases von einer Steuer- und/oder Regeleinheit bestimmt werden. Beispielsweise kann die Steuer- und/oder Regeleinheit die Dauer bzw. die reduzierte Geschwindigkeit in Abhängigkeit von den oben genannten Parametern in einem Speicher in der Art einer Sortenverwaltung ablegen und aus diesem bei Bedarf, beispielsweise nach Eingabe der jeweiligen Parameter über eine Eingabevorrichtung der Steuer- und/oder Regeleinheit auslesen. Darüber hinaus kann der Volumenstrom des Schutzgases bei Verwendung einer regelbaren Einspritzvorrichtung, beispielsweise einer der oben beschriebenen Einspritzdüsen, in Abhängigkeit von dem Behältertyp und/oder dem Kopfraumvolumen und/oder dem gewünschten Durchsatz an Behältern von der Steuer- und/oder Regeleinheit bestimmt werden, wobei erneut eine Sortenverwaltung zum Einsatz gelangen kann.

Die Steuer- und/oder Regeleinheit kann dann die Bewegungsprofile der Transportelemente innerhalb der durch das Transportsystem vorgegebenen Beschränkungen entsprechend anpassen.

Gemäß einer Weiterbildung kann die Einspritzvorrichtung das Schutzgas kontinuierlich abgeben. Bei dieser Weiterbildung können die Transportelemente mit reduzierter Geschwindigkeit an der Einspritzvorrichtung vorbeibewegt werden oder an der Einspritzvorrichtung zeitweise angehalten werden. In beiden Fällen ist die Menge an verlorenem Schutzgas, das an den Behältern vorbei austritt, gegenüber den herkömmlichen Verfahren reduziert. Dadurch reduziert sich auch das Risiko von Vereisungen an Maschinenbauteilen sowie der Wasserverbrauch, um solche Vereisungen zu vermeiden.

Gemäß einer alternativen Weiterbildung kann die Einspritzvorrichtung das Schutzgas getaktet abgeben. In diesem Fall werden die Transportelemente bevorzugt zeitweise an der Einspritzvorrichtung angehalten. Die Taktung kann von der Steuer- und/oder Regeleinheit in Abhängigkeit von dem gewünschten Durchsatz an Behältern bestimmt werden. Gegenüber herkömmlichen Verfahren ergibt sich durch den Einsatz des Langstator-Linearmotorantriebs im Bereich der Einspritzvorrichtung die Möglichkeit einer erhöhten Taktung und damit eines höheren Durchsatzes an Behältern.

Gemäß einer weiteren Weiterbildung können mehrere Transportelemente derart mittels des Langstator-Linearmotorantriebs bewegt werden, dass die transportierten Behälter als Gruppe unter einer entsprechenden Anzahl von Einspritzdüsen der Einspritzvorrichtung zum gleichzeitigen Einspritzen des Schutzgases in die Behälter platziert werden. Dies kann wie oben beschrieben sowohl bei Transportelementen, die jeweils nur einen Behälter transportieren, als auch bei Transportelementen, die mehr als einen Behälter transportieren, erfolgen. Die Einspritzdüsen der Einspritzvorrichtung können dabei wie oben beschrieben je nach Gestaltung der Transportelemente in einer Reihe oder einer Matrix angeordnet sein. Darüber hinaus kann die Gruppe wie oben beschrieben flexibel an den Ausfall einer oder mehrerer der Einspritzdüsen angepasst werden, indem an den entsprechenden Stellen kein Transportelement in der Gruppe vorgesehen ist. Auf diese Weise kann die Steuer- und/oder Regeleinheit flexibel auf den Ausfall von Einspritzdüsen reagieren, ohne dass Ausschuss produziert wird oder der gesamte Prozess gestoppt werden müsste.

Die oben genannten Aufgaben werden schließlich auch durch die Verwendung eines Transportsystems mit einer geschlossenen Transportbahn, an der eine Vielzahl von einzeln steuerbaren Transportelementen zum Transport wenigstens eines Behälters bewegbar gelagert ist, und einem Langstator-Linearmotorantrieb zum Antrieb der Transportelemente, in einer Behälterbehandlungsanlage, um die mittels eines Füllers mit einem flüssigen Lebensmittel befüllten Behälter zu einem Verschließer zu transportieren, gelöst, wobei an der Transportbahn eine Einspritzvorrichtung zum Einbringen eines Schutzgases in die befüllten Behälter angeordnet ist, wobei die Einspritzvorrichtung wenigstens eine Einspritzdüse zum Einspritzen des Schutzgases in eine Öffnung der Behälter aufweist, und wobei des Weiteren eine Steuer- und/oder Regeleinheit vorgesehen ist, die dazu ausgebildet ist, die Transportelemente mit reduzierter Geschwindigkeit an der wenigstens einen Einspritzdüse vorbeizubewegen oder zeitweise an der wenigstens einen Einspritzdüse zu stoppen.

Hierbei können dieselben Variationen und Weiterbildungen, die oben im Zusammenhang mit der erfindungsgemäßen Vorrichtung und dem erfindungsgemäßen Verfahren zum Einbringen von Schutzgas in Behälter beschrieben wurden, auch auf die Verwendung des Transportsystems in einer Behälterbehandlungslage angewendet werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Figur 1: zeigt eine schematische Ansicht einer Behälterbehandlungsanlage mit einer Vorrichtung zum Einbringen von Schutzgas gemäß der vorliegenden Erfindung.
- Figur 2: zeigt eine Draufsicht auf ein Transportsystem mit kreisrunder Transportbahn in Kombination mit einer Einspritzvorrichtung gemäß der vorliegenden Erfindung.
- Figur 3: zeigt eine dreidimensionale Ansicht des Transportsystems der Figur 2.
- Figur 4: zeigt schematisch zwei Varianten für das Einbringen von Schutzgas in die Behälter gemäß der vorliegenden Erfindung.
- Figur 5: zeigt verschiedene Weiterbildungen von Einspritzvorrichtungen gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

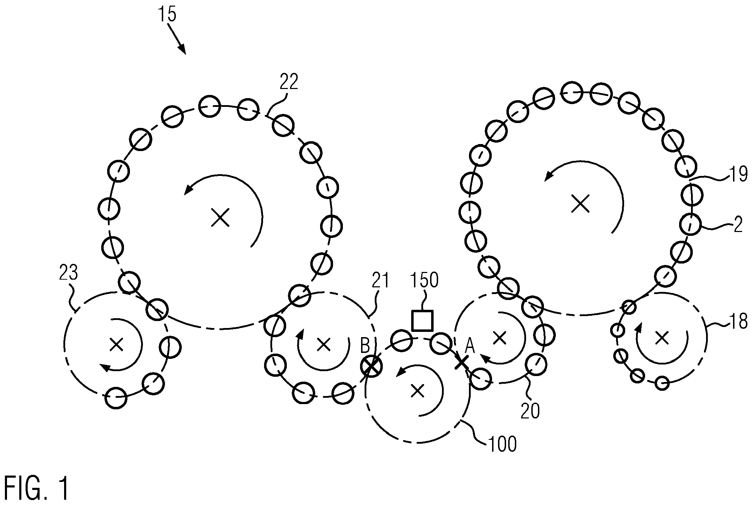

Die Figur 1 zeigt eine schematische Ansicht einer Behälterbehandlungsanlage mit einer Vorrichtung zum Einbringen von Schutzgas gemäß der vorliegenden Erfindung. Es versteht sich, dass die Behälterbehandlungsanlage weitere Elemente zusätzlich zu den dargestellten Elementen, beispielsweise eine Blasmaschine, eine Etikettiermaschine, eine Direktdruckmaschine oder dergleichen aufweisen kann. Gleichzeitig können dargestellte Elemente wie die Transfersterne 20 und 21 entfallen oder durch andere Elemente ersetzt werden.

Die in Figur 1 dargestellte Behälterbehandlungsanlage 15 umfasst einen als Rundläufermaschine ausgebildeten Füller 19, einen ebenfalls als Rundläufermaschine ausgebildeten Verschließer 22 und eine Vorrichtung zum Einbringen von Schutzgas in die von dem Füller befüllten Behälter 2, die, in der Prozesstrecke, zwischen Füller 19 und Verschließer 22 angeordnet ist. Des Weiteren ist in der Figur 1 ein beispielhafter Einlaufstern 18 vorgesehen, durch den die zu befüllenden Behälter 2 an den Füller 19 übergeben werden. Auf ihrem Weg um den Füller 19 werden die Behälter wie an sich bekannt mit einem flüssigen Lebensmittel befüllt und anschließend an einen Auslaufstern 20 übergeben.

Von diesem werden die befüllten Behälter an einer Aufnahmestelle A von dem Transportsystem 100 der Vorrichtung zum Einbringen des Schutzgases übernommen und mittels der Transportelemente des Transportsystems einer Einspritzvorrichtung 150 für das Schutzgas zugeführt, an der das Schutzgas durch eine Öffnung bzw. einen Mündungsbereich der Behälter in den Kopfraum der Behälter eingebracht, beispielsweise eingespritzt, wird. Anschließend werden die mit dem Schutzgas behandelten Behälter durch das Transportsystem 100 zu einer Abgabestelle B transportiert, wo sie an den Auslaufstern 21 übergeben werden. Es versteht sich, dass auf den Einlaufstern 20 und den Auslaufstern 21 verzichtet werden kann, indem das Transportsystem mit der Aufnahmestelle A unmittelbar am Füller 19 und der Abgabestelle B unmittelbar am Verschließer 22 angeordnet wird.

Von dem Auslaufstern 21 werden die Behälter 2 an den Verschließer 22 übergeben, der sie mit Verschlusselementen, beispielsweise Schraubverschlüssen, Korken, Kronkorken, Deckeln oder dergleichen verschließt. Die verschlossenen Behälter werden anschließend an den Auslaufstern 23 übergeben, der sie einer weiteren Behälterbehandlungsmaschine, beispielsweise einer Etikettiermaschine oder einer Direktdruckmaschine, zuführen kann.

In der in der Figur 1 dargestellten, nicht limitierenden Weiterbildung ist das Transportsystem 100 der Vorrichtung zum Einbringen des Schutzgases kreisrund als Transferstern ausgebildet. Es versteht sich jedoch, dass die vorliegende Erfindung nicht auf eine kreisrunde Ausbildung des Transportsystems beschränkt ist, sondern dass die Transportbahn eine Vielzahl anderer Formen, beispielsweise elliptische, nierenförmige oder taillierte, annehmen kann, solange die Transportbahn geschlossen ist und zur Übernahme der Behälter an der Aufnahmestelle A und zur Übergabe an der Abgabestelle B ausgebildet ist.

Erfindungsgemäß ist das Transportsystem 100 zumindest zwischen der Aufnahmestelle A und der Abgabestelle B mit wenigstens einem Langstator-Linearmotorantrieb ausgebildet, der eine Vielzahl von Transportelementen mit individuell steuerbaren Bewegungsprofilen entlang der Transportbahn des Transportsystems bewegt. Wie oben erwähnt kann insbesondere die gesamte Transportbahn mit wenigstens einem Langstator-Linearmotorantrieb ausgebildet sein.

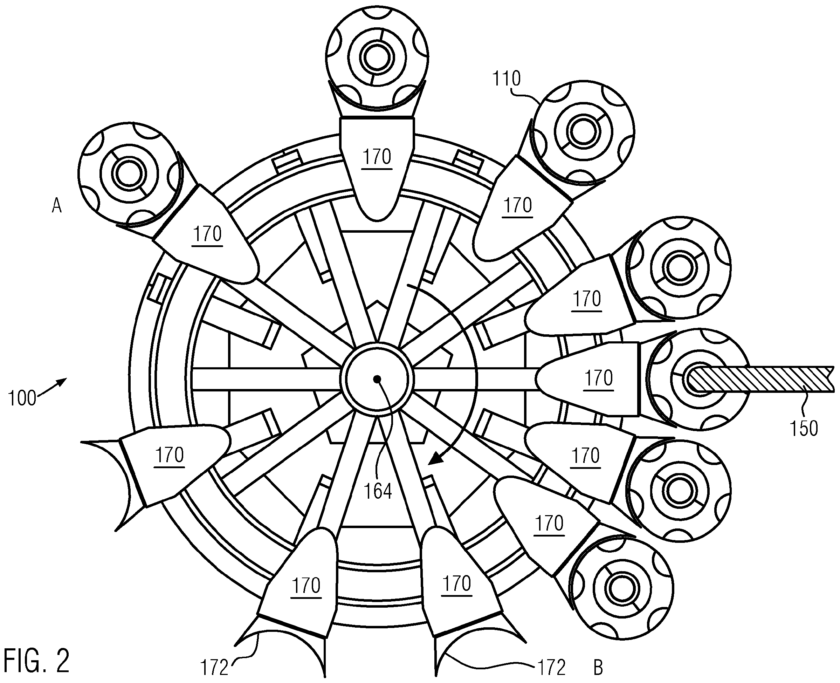

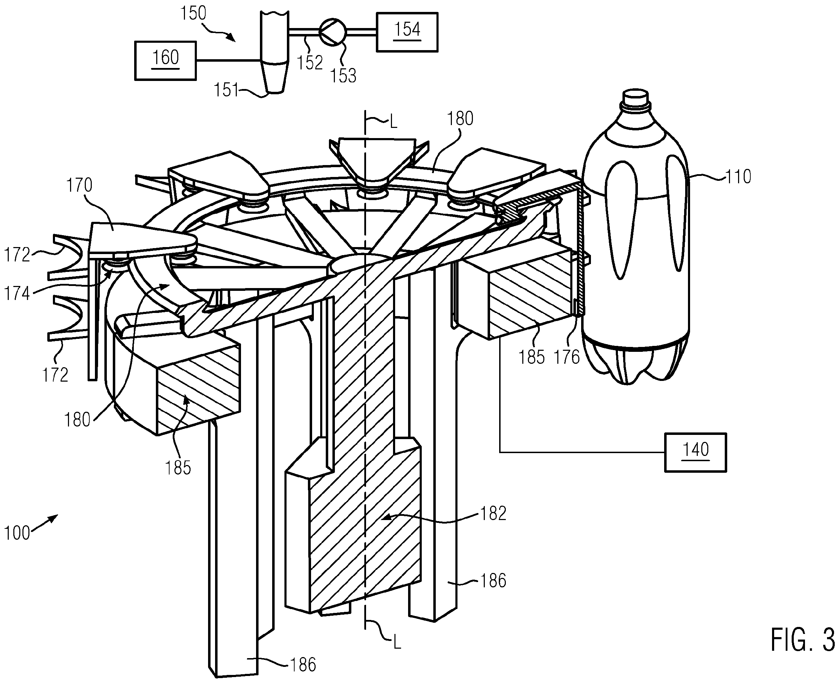

Eine exemplarische Ausführung eines solchen Transportsystems 100 ist in den Figuren 2 und 3 schematisch dargestellt. Die dargestellte Weiterbildung kann als Langstator-Linearmotor-Transferstern angesehen werden. Aufgrund der individuellen Steuerbarkeit der Transportelemente entlang der Transportbahn des Transfersterns 100 kann dieser wie in der Figur 1 angedeutet zusätzlich eine Teilung des Stroms transportierter Behälter verändern. So wird in der Weiterbildung der Figur 1 eine geringere Teilung am Füller 19 mittels der Transportelemente des Transportsystems 100 auf eine größere Teilung am Verschließer 22 auseinandergefahren.

Figur 2 zeigt eine Draufsicht auf ein Transportsystem mit kreisrunder Transportbahn in Kombination mit einer Einspritzvorrichtung gemäß der vorliegenden Erfindung. Figur 3 zeigt eine dreidimensionale Ansicht des Transportsystems der Figur 2.

Bei der in den Figuren 2 und 3 gezeigten exemplarischen, nicht limitierenden Weiterbildung werden Behälter 110 mittels eines linearmotorgetriebenen Transportsystems 100 mit einer Vielzahl von Transportelementen 170 zwischen einer Aufnahmestelle A und einer Abgabestelle B befördert. In der dargestellten Weiterbildung verfügen die Transportelemente 170 über Halteelemente 172, die die exemplarisch als Flaschen 110 dargestellten Behälter aufnehmen. Die Halteelemente 172 können die Behälter 110 beispielsweise auf einem Schiebeblech stehend von der Aufnahmestelle A zur Abgabestelle B schieben, wobei ein äußeres Führungselement (nicht dargestellt) vorgesehen sein kann, um ein Herausrutschen der Behälter aus den Halteelementen 172 zu verhindern. Alternativ ist ein Transport der Behälter mit speziell ausgebildeten Greifelementen, beispielsweise mit Neckhandlingklammern, denkbar. In der nicht limitierenden Weiterbildung der Figuren 2 und 3 werden die Behälter aufrecht transportiert, sodass ihre Öffnungen nach oben weisen. In dieser Weiterbildung kann die Einspritzvorrichtung 150 wie in den Figuren 2 und 3 angedeutet oberhalb der Bewegungsebene der Mündungen der Behälter 110 angeordnet sein, sodass das Schutzgas von oben in die Behälteröffnungen eingespritzt wird.

Wie in der Figur 2 erkennbar werden die Behälter 110 von den Transportelementen 170 mit individuellen Bewegungsprofilen bewegt, sodass sich insbesondere der Abstand zwischen aufeinanderfolgenden Transportelementen 170 entlang der Transportbahn ändern kann. Wie aus der Draufsicht der Figur 2 erkennbar ist die Transportbahn des Transportsystems kreisrund ausgebildet, wobei die Transportelemente 170 um den Mittelpunkt 164 dieses Kreises umlaufen. In der dreidimensionalen Ansicht der Figur 3 ist zudem eine gestrichelte Linie L durch den Mittelpunkt der Transportbahn dargestellt. Bei der kreisrunden Weiterbildung der Transportbahn sind auch die Führungsschiene 180 und der Langstator 185 kreisrund ausgebildet und konzentrisch bezüglich der Transportbahn angeordnet.

Wie insbesondere in der Figur 3 erkennbar sind die Transportelemente 170 über Laufrollen 174 bewegbar an der Führungsschiene 180 gelagert. Dabei können die Laufrollen 174 wie dargestellt ein konkaves Abrollprofil besitzen, das in Eingriff mit einem entsprechend konvex ausgebildeten Spurkranz der Führungsschiene 180 steht. Bei der hier dargestellten Weiterbildung weisen die Transportelemente 170 jeweils drei Laufrollen 174 auf, die beidseitig an der Führungsschiene 180 angreifen. Neben den Halteelementen 172 sind an den Transportelementen 170, insbesondere an einem vertikal ausgerichteten Segment der Transportelemente, Sekundärteile 176 vorgesehen, deren Magnete mit den Magneten des Langstators 185 wechselwirken. In der dargestellten Weiterbildung ist die spezielle Anordnung der Sekundärteile der Art, dass die Sekundärteile 176 außen um den Langstator 185 umlaufen. Es versteht sich jedoch, dass die vorliegende Erfindung nicht auf diese Anordnung von Sekundärteilen und Langstator beschränkt ist, sondern ebenso auf innenliegende Sekundärteile sowie Kombinationen von innen- und außenliegenden Sekundärteilen sowie innen- und außenliegenden Langstatoren angewendet werden kann. Insbesondere können mehrere Führungsschienen und/oder mehrere Langstatoren vorgesehen sein. Diese müssen lediglich parallel zueinander angeordnet sein. Auch können die Sekundärteile horizontal, das heißt in der Bewegungsebene, angeordnet sein und mit entsprechend ausgerichteten Langstatoren wechselwirken.

In der dargestellten speziellen Weiterbildung ist der Langstator 185 an den Halterungen 186 angeordnet. Die Führungsschiene 180 ist über Speichen mit einer zentralen Halterung 182 verbunden. Es versteht sich, dass die in den Figuren 2 und 3 dargestellte Weiterbildung lediglich den Einsatz eines Linearmotorantriebs an einem Transferstern illustrieren soll, wobei eine Vielzahl von Variationen denkbar ist.

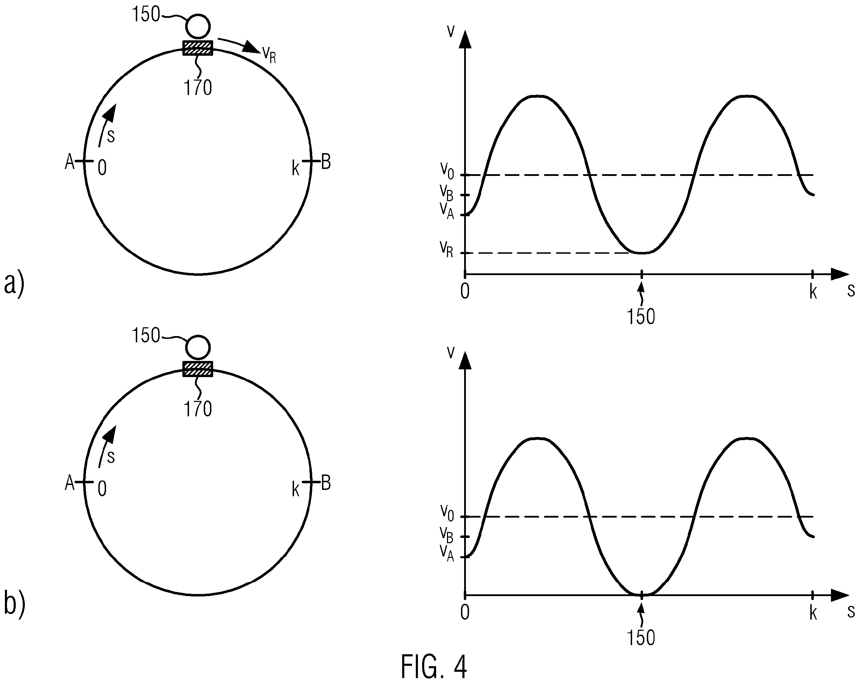

In der Figur 3 ist weiterhin eine Steuer- und/oder Regeleinheit 140 dargestellt, die die Magnete des Langstators 185 bzw. der Sekundärteile 176 derart angesteuert, dass die Transportelemente 170 mit dem gewünschten Bewegungsprofil entlang der Führungsschiene 180 der Transportbahn bewegt werden. Insbesondere können die Transportelemente 170 wie nachfolgend im Zusammenhang mit der Figur 4 genauer beschrieben mit reduzierter Geschwindigkeit an der Einspritzvorrichtung 150 vorbeibewegt werden oder an dieser vorübergehend angehalten werden.

Die Einspritzvorrichtung 150 ist in der Figur 3 exemplarisch mit einer einzigen Einspritzdüse 151 ausgebildet, die derart oberhalb der Transportbahn angeordnet ist, dass das Schutzgas von oben in die Flaschenöffnungen eingespritzt werden kann. Die dargestellte, exemplarische Einspritzvorrichtung 150 umfasst weiterhin einen Vorratsspeicher 154, beispielsweise einen Tank, für das Schutzgas, von dem das Schutzgas über eine Leitung 152 mittels einer Förderpumpe 153 zur Einspritzdüse 151 gepumpt wird. Die Förderpumpe 153 kann regelbar ausgebildet sein, wobei eine Steuereinheit 160 der Einspritzvorrichtung 150 die Förderrate der Förderpumpe 153 wie oben beschrieben in Abhängigkeit von dem Behältertyp, dem Kopfraumvolumen und/oder dem Durchsatz bzw. der Verweildauer der Behälter an der Einspritzdüse 151 regelt. Die Förderrate kann dabei derart eingeregelt werden, dass eine Menge an Schutzgas in den Kopfraum der Behälter eingespritzt wird, die ausreicht, um den Restsauerstoff zuverlässig aus dem Kopfraum zu verdrängen. Für den Fall, dass das Schutzgas unter Druck in dem Vorratsspeicher 154 gespeichert wird, kann die Förderpumpe 153 durch ein Regelventil ersetzt werden. Dieses kann auch unmittelbar an der Einspritzdüse 151 angeordnet sein und von der Steuereinheit 160 je nach Bedarf an Schutzgas geregelt werden. Zum Taktbetrieb kann die Einspritzvorrichtung mit einem einfachen oder einem regelbaren Ventil ausgestattet sein, welches von der Steuereinheit 160 geöffnet wird, wenn ein Behälter 110 unter der Einspritzdüse 151 platziert wurde. Nach Abschluss des Einspritzvorgangs und vor dem Weiterbewegen des Behälters schließt die Steuereinheit 160 das Ventil, um ein unnötiges Austreten von Schutzgas zu vermeiden.

Die Steuereinheit 160 der Einspritzvorrichtung 150 und die Steuer- und/oder Regeleinheit 140 des Transportsystems 100 interagieren dabei über den Austausch von Steuersignalen. Beispielsweise signalisiert die Steuer- und/oder Regeleinheit 140 des Transportsystems, dass ein Behälter unter der Einspritzdüse 151 platziert ist, worauf die Steuereinheit 160 das Ventil öffnet. Umgekehrt kann die Steuereinheit 160 den Abschluss des Einspritzvorgangs an die Bewegungssteuerung 140 signalisieren, sodass diese den Behälter weiterbewegt. Es versteht sich, dass die Steuereinheit 160 der Einspritzvorrichtung und die Steuer- und/oder Regeleinheit 140 des Transportsystems auch in einer gemeinsamen Steuer- und/oder Regeleinheit, beispielsweise einer speicherprogrammierbaren Steuerung, integriert sein können.

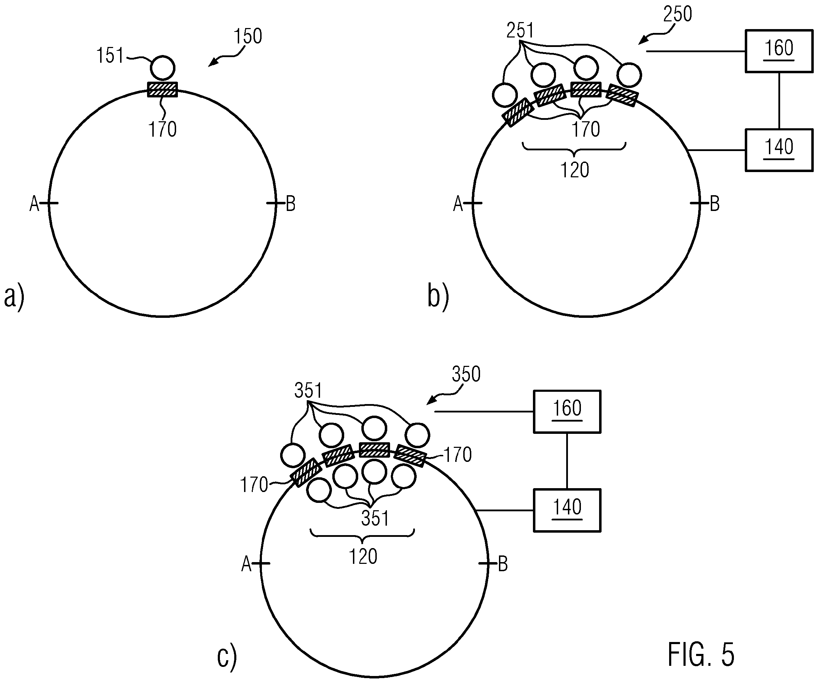

Eine Vielzahl alternativer Weiterbildungen der Einspritzvorrichtung 150 ist denkbar, insbesondere wie in Figur 5 gezeigt solche mit mehr als einer Einspritzdüse.

In der Draufsicht der Figur 2 ist erkennbar, dass die Transportelemente 170 im Bereich der Einspritzvorrichtung 150 mit einem reduzierten Abstand bewegt werden. Um die Verweildauer der Behälter 110 an der Einspritzvorrichtung 150 zu verlängern, werden die Transportelemente mit reduzierter Geschwindigkeit an der Einspritzvorrichtung 150 vorbeibewegt oder an dieser vorübergehend angehalten. Um dennoch einen schnellen Wechsel der Behälter an der Einspritzvorrichtung zu ermöglichen, können die Transportelemente derart bewegt werden, dass vom nachfolgenden Transportelement eine möglichst kleine Strecke zur Einspritzvorrichtung zu überwinden ist, wenn die Einspritzvorrichtung von dem vorangehenden Transportelement freigegeben wird. Dies wird durch den erwähnten reduzierten Abstand der Transportelemente im Bereich der Einspritzvorrichtung erzielt. Zum Ausgleich können die Transportelemente entlang anderer Bereiche der Transportbahn beschleunigt bewegt werden.

Beispielhafte Bewegungsprofile für die beiden genannten Fällte sind in den Figuren 4a bzw. 4b als Weg-Geschwindigkeitsdiagramme dargestellt. Die Figuren zeigen darüber hinaus jeweils eine vereinfachte Darstellung der Transportbahn mit einem schematisch dargestellten Transportelement 170 und einer schematisch dargestellten Einspritzvorrichtung 150. Das Transportelement 170 bewegt sich durch den Linearmotorantrieb angetrieben entlang des Weges s von der Aufnahmestelle A beim Punkt 0 zur Abgabestelle B beim Punkt k und passiert dabei die Einspritzvorrichtung 150.

In dem in der Figur 4a gezeigten Fall wird das Transportelement an der Einspritzvorrichtung 150 mit einer reduzierten, aber von Null verschiedenen Geschwindigkeit **v_{R}** vorbeibewegt, um die Verweildauer der mitgeführten Behälter an der Einspritzdüse zu verlängern. In dem in der Figur 4b gezeigten Fall hingegen wird das Transportelement an der Einspritzvorrichtung 150 vorübergehend angehalten, sodass seine Geschwindigkeit v vorübergehend Null wird.

Zum Ausgleich wird das Transportelement 170 wie in den Weg-Geschwindigkeitsdiagrammen erkennbar in anderen Bereichen der Transportbahn mit einer erhöhten Geschwindigkeit bewegt. Die Weg-Geschwindigkeitsdiagramme zeigen außerdem exemplarische Synchrongeschwindigkeiten **v_{A}** und **v_{B}**, mit denen sich die Transportelemente entsprechend den Geschwindigkeiten der Behälter bei der Übernahme bzw. Übergabe an den Stellen A und B bewegen. Schließlich ist in den Geschwindigkeitsdiagrammen die mittlere Geschwindigkeit **v₀** als gestrichelte Linie eingezeichnet. Die mittlere Geschwindigkeit **v₀** ist dabei die (konstante) Geschwindigkeit, mit der die Behälter bei einem herkömmlichen Transferstern bewegt werden müssten, um in derselben Zeit von der Aufnahmestelle A zur Abgabestelle B transportiert zu werden. Im Gegensatz zum herkömmlichen Transferstern ergibt sich bei den in Figur 4 dargestellten und mittels des Langstator-Linearmotorantriebs umgesetzten Bewegungsprofilen der Transportelemente somit eine erhöhte Verweildauer der Transportelemente an der Einspritzvorrichtung.

Auf diese Weise kann somit die Rate, mit der das Schutzgas von der Einspritzvorrichtung abgegeben wird, reduziert werden, ohne dass die Menge des in jeden Behälter eingespritzten Schutzgases gegenüber dem herkömmlichen Transferstern reduziert würde. Dadurch kann beispielsweise bei einem kontinuierlich abgegebenen Strahl an Schutzgas die Menge des an den Behältern vorbei abgegebenen Schutzgases reduziert werden, wodurch auch die zur Vermeidung von Vereisungen benötigte Wassermenge reduziert wird. Alternativ oder ergänzend kann jedoch auch der Durchsatz an Behältern erhöht werden, da das Verhältnis zwischen Verweildauer an der Einspritzvorrichtung und Transportzeit zwischen Aufnahmestelle A und Abgabestelle B bei den erfindungsgemäßen Vorrichtungen günstiger ist als bei herkömmlichen Transfersternen.

Es versteht sich, dass die spezifischen, in Figur 4 dargestellten Weg-Geschwindigkeitsdiagramme lediglich beispielhafte Bewegungsprofile darstellen und unter der Vorgabe einer gegenüber der mittleren Geschwindigkeit reduzierten Geschwindigkeit bzw. dem vorübergehenden Anhalten an der Einspritzvorrichtung erheblich abweichende Profile annehmen können.

Die Figur 5 zeigt verschiedene Weiterbildungen von Einspritzvorrichtungen, die mit den in den Figuren 2 und 3 dargestellten Transportsystemen kombiniert werden können. In der Figur 5a ist zunächst die Weiterbildung gezeigt, die auch in der Figur 3 dargestellt ist. Hier weist die Einspritzvorrichtung 150 nur eine einzige Einspritzdüse 151 auf. An dieser werden die von den Transportelementen 170 transportierten Behälter wie oben beschrieben mit reduzierter Geschwindigkeit vorbeibewegt und vorübergehend angehalten.

In der Figur 5b ist eine alternative Weiterbildung dargestellt, bei der die Einspritzvorrichtung 250 über mehrere (vier in der Darstellung) in einer Reihe entlang der Transportbahn angeordnete Einspritzdüsen 251 verfügt. Die Einspritzdüsen 251 können dabei einzeln von der Steuereinheit 160 der Einspritzvorrichtung 250 gesteuert werden. Bei der dargestellten Weiterbildung werden die Einspritzdüsen 251 bevorzugt getaktet betrieben. Zunächst wird von der Steuer- und/oder Regeleinheit 140 gesteuert eine Gruppe 120 aus entsprechend vielen Transportelementen 170 derart gemeinsam bewegt, dass die mitgeführten Behälter unter den jeweiligen Einspritzdüsen 251 platziert werden. Bei Erreichen der gewünschten Positionen sendet die Steuer- und/oder Regeleinheit 140 ein entsprechendes Signal an die Steuereinheit 160, die daraufhin die Einspritzdüsen aktiviert. Nach Abschluss des Einspritzvorgangs meldet umgekehrt die Steuereinheit 160 dies per Signal an die Steuer- und/oder Regeleinheit, die daraufhin die gesamte Gruppe 120 weiterbewegt. Fallen eine oder mehrere Einspritzdüsen 251 aus, so kann die Steuer- und/oder Regeleinheit 140 wie oben beschrieben entsprechend durch Anpassen der Gruppe darauf reagieren. Bei voller Betriebsfähigkeit der Einspritzvorrichtung 250 erhöht sich der Durchsatz auf ein Vielfaches.

Schließlich ist in der Figur 5c eine Weiterbildung gezeigt, bei der zwei Reihen von Einspritzdüsen 351 der Einspritzvorrichtung 350 entlang der Transportbahn angeordnet sind. In diesem Fall sind die Transportelemente 170 anders als in den Figuren 5a und 5b jeweils zum Transport von zwei Behältern ausgebildet. Erneut werden vier Transportelemente 170 durch die Steuer- und/oder Regeleinheit 140 gesteuert als Gruppe 120 bewegt. Die Steuereinheit 160 der Einspritzvorrichtung 350 steuert dabei die Einspritzdüsen. Bei vollen Funktionsfähigkeit der Einspritzdüsen 351 steigert die Einspritzvorrichtung 350 der Figur 5c den Durchsatz weiter gegenüber der Einspritzvorrichtung 250 der Figur 5b.

Die gezeigten Einspritzvorrichtungen und Transportsysteme nutzen die Flexibilität eines Langstator-Linearmotorantriebs, um die Verweildauer der befüllten Behälter an der Einspritzvorrichtung zu verlängern und im Gegenzug den Durchsatz an Behältern zu steigern. Gleichzeitig senken sie den Verlust an Schutzgas durch zwischen die Behälter tretendes Schutzgas, wodurch auch der Wasserverbrauch zur Vermeidung von Vereisungen von Maschinenbauteilen reduziert wird. Insgesamt führen die beschriebenen Vorrichtungen und Systeme zu einem geringeren Medienverbrauch der Behälterbehandlungsanlage und somit zu reduzierten Betriebskosten. Darüber hinaus gestattet der Einsatz des Langstator-Linearmotorantriebs auch das Zusammenfahren von Lücken sowie einen flexiblen Teilungswechsel, beispielsweise bei einem Formatwechsel.

## Patentansprüche

1. Vorrichtung zum Einbringen eines Schutzgases in Behälter (2, 110), insbesondere in Flaschen, umfassend:
ein Transportsystem (100) mit einer geschlossenen Transportbahn, welches dazu ausgebildet ist, die Behälter von einer Aufnahmestelle zu einer Abgabestelle zu transportieren; und
eine Einspritzvorrichtung (150; 250; 350), welche derart an der Transportbahn angeordnet und ausgebildet ist, dass damit das Schutzgas beim Transport der Behälter von der Aufnahmestelle zur Abgabestelle in die Behälter eingebracht werden kann;
**dadurch gekennzeichnet, dass**
das Transportsystem (100) zumindest zwischen der Aufnahmestelle und der Abgabestelle mit einem Langstator-Linearmotorantrieb (185) zum einzeln steuerbaren Bewegen einer Vielzahl von Transportelementen (170) für die Behälter entlang der Transportbahn ausgebildet ist,
dass die Einspritzvorrichtung (150; 250; 350) wenigstens eine Einspritzdüse (151; 251; 351) zum Einspritzen des Schutzgases in eine Öffnung der Behälter aufweist, und
dass des Weiteren eine Steuer- und/oder Regeleinheit (140) vorgesehen ist, die dazu ausgebildet ist, die Transportelemente (170) mit reduzierter Geschwindigkeit an der wenigstens einen Einspritzdüse vorbeizubewegen oder zeitweise an der wenigstens einen Einspritzdüse zu stoppen.

2. Vorrichtung nach Anspruch 1, wobei die Einspritzdüse (151; 251; 351) zum kontinuierlichen Betrieb ausgebildet ist.

3. Vorrichtung nach Anspruch 1, wobei die Einspritzdüse (151; 251; 351) zum getakteten Betrieb ausgebildet ist.

4. Vorrichtung nach Anspruch 3, wobei eine Vielzahl von Einspritzdüsen (251; 351) zum gleichzeitigen Einspritzen des Schutzgases in eine entsprechende Anzahl von Behältern (110) vorgesehen ist, und wobei die Behälter mittels der Steuer- und/oder Regeleinheit (140), insbesondere durch Ansteuern einer entsprechenden Anzahl von Transportelementen (170), gruppenweise an der Vielzahl von Einspritzdüsen angeordnet werden.

5. Vorrichtung nach einem der vorhergehenden Ansprüche, wobei das Schutzgas Stickstoff oder Kohlendioxid ist oder umfasst.

6. Vorrichtung nach einem der vorhergehenden Ansprüche, wobei das Transportsystem (100) als Transferstern ausgebildet ist.

7. Behälterbehandlungsanlage (15) für flüssige Lebensmittel, umfassend:
die Vorrichtung nach einem der vorhergehenden Ansprüche;
einen Füller (19), insbesondere ein Füllerkarussell, zum Abfüllen eines flüssigen Lebensmittels in Behälter (2); und
einen Verschließer (22) zum Verschließen der befüllten Behälter;
wobei die Vorrichtung zwischen Füller und Verschließer angeordnet ist.

8. Verfahren zum Einbringen eines Schutzgases in Behälter (2, 110), insbesondere in Flaschen, mit den Schritten:
Übernahme der Behälter von einem Füller (19), insbesondere einem Füllerkarussell; und
Transportieren der Behälter zu einem Verschließer (22);
wobei das Schutzgas mittels einer Einspritzvorrichtung (150; 250; 350) in die transportierten Behälter eingebracht wird,
**dadurch gekennzeichnet, dass**
die Behälter zumindest im Bereich der Einspritzvorrichtung mittels einer Vielzahl einzeln steuerbarer Transportelemente (170) transportiert werden, die von einem Langstator-Linearmotorantrieb (185) angetrieben werden, und
dass die Transportelemente (170) zum Einbringen des Schutzgases mit reduzierter Geschwindigkeit an der Einspritzvorrichtung (150; 250; 350) vorbeibewegt oderzeitweise an der Einspritzvorrichtung gestoppt werden.

9. Verfahren nach Anspruch 8, weiterhin mit den Schritten:
Befüllen der Behälter mittels des Füllers (19) mit einem flüssigen Lebensmittel;
Übergabe der Behälter nach Einbringen des Schutzgases an den Verschließer (22); und
Verschließen der Behälter mit einem Verschlusselement.

10. Verfahren nach einem der Ansprüche 8 oder 9, wobei die Einspritzvorrichtung (150; 250; 350) das Schutzgas kontinuierlich abgibt.

11. Verfahren nach einem der Ansprüche 8 oder 9, wobei die Einspritzvorrichtung (150; 250; 350) das Schutzgas getaktet abgibt.

12. Verfahren nach Anspruch 11, wobei mehrere Transportelemente (170) derart mittels des Langstator-Linearmotorantriebs (185) bewegt werden, dass die transportierten Behälter (110) als Gruppe (120) unter einer entsprechenden Anzahl von Einspritzdüsen (251; 351) der Einspritzvorrichtung (250; 350) zum gleichzeitigen Einspritzen des Schutzgases in die Behälter platziert werden.

13. Verwendung eines Transportsystems (100) mit einer geschlossenen Transportbahn, an der eine Vielzahl von einzeln steuerbaren Transportelementen (170) zum Transport wenigstens eines Behälters (110) bewegbar gelagert ist, und einem Langstator-Linearmotorantrieb (185) zum Antrieb der Transportelemente, in einer Behälterbehandlungsanlage (15), um mittels eines Füllers (19) mit einem flüssigen Lebensmittel befüllten Behälter (110) zu einem Verschließer (22) zu transportieren,
**dadurch gekennzeichnet, dass**
an der Transportbahn eine Einspritzvorrichtung (150; 250; 350) zum Einbringen eines Schutzgases in die befüllten Behälter (110) angeordnet ist,
dass die Einspritzvorrichtung (150; 250; 350) wenigstens eine Einspritzdüse (151; 251; 351) zum Einspritzen des Schutzgases in eine Öffnung der Behälter aufweist, und
dass des Weiteren eine Steuer- und/oder Regeleinheit (140) vorgesehen ist, die dazu ausgebildet ist, die Transportelemente (170) mit reduzierter Geschwindigkeit an der wenigstens einen Einspritzdüse vorbeizubewegen oder zeitweise an der wenigstens einen Einspritzdüse zu stoppen.

## Claims

1. Apparatus for introducing a protective gas into containers (2, 110), in particular bottles, comprising:
a transport system (100) with a closed transport track, which is configured to transport the containers from a pick-up position to a drop-off position; and
an injection apparatus (150; 250; 350), which is arranged at the transport track and configured in such a way that the protective gas can be introduced into the containers with it while transporting the containers from the pick-up position to the drop-off position;
**characterized in that**
the transport system (100) is configured at least in between the pick-up position and the drop-off position with a long stator linear drive (185) for individually controllable movement of a plurality of transport elements (170) for the containers along the transport track,
that the injection apparatus (150; 250; 350) has at least one injection nozzle (151; 251; 351) for injecting the protective gas into an opening of the containers, and
that furthermore a control and/or regulating unit (140) is provided, which is configured to move the transport elements (170) with reduced velocity past the at least one injection nozzle or to temporarily stop at the at least one injection nozzle.

2. Apparatus according to claim 1, wherein the injection nozzle (151; 251; 351) is configured for continuous operation.

3. Apparatus according to claim 1, wherein the injection nozzle (151; 251; 351) is configured for clocked operation.

4. Apparatus according to claim 3, wherein a plurality of injection nozzles (251; 351) is provided for simultaneous injection of the protective gas in a respective number of containers (110), and wherein the containers are arranged in groups at the plurality of injection nozzles by means of the control and/or regulating unit (140), in particular by controlling a respective number of transport elements (170).

5. Apparatus according to one of the preceding claims, wherein the protective gas is or comprises nitrogen or carbon dioxide.

6. Apparatus according to one of the preceding claims, wherein the transport system (100) is configured as a transfer star.

7. Container treatment plant (15) for liquid food, comprising:
the apparatus according to one of the preceding claims;
a filler (19), in particular a filler carousel, for filling a liquid food into containers (2); and
a closer (22) for closing the filled containers;
wherein the apparatus is arranged between filler and closer.

8. Method for introducing a protective gas into containers (2, 110), in particular bottles, with the steps:
Taking over the containers from a filler (19), in particular a filler carousel; and transporting the containers to a closer (22);
wherein the protective gas is introduced by means of an injection apparatus (150; 250; 350) into the transported containers,
**characterized in that**
the containers are transported at least in the area of the injection apparatus by means of a plurality of individually controllable transport elements (170), which are driven by a long stator linear drive (185), and
that the transport elements (170) are moved past the injection apparatus (150; 250; 350) with reduced velocity or temporarily stopped at the injection apparatus for introducing the protective gas.

9. Method according to claim 8, furthermore with the steps:
filling of the containers by means of the filler (19) with a liquid food;
transferring the containers after introducing the protective gas to the closer (22); and
closing the containers with a closing element.

10. Method according to one of claims 8 or 9, wherein the injection apparatus (150; 250; 350) releases the protective gas continuously.

11. Method according to one of claims 8 or 9, wherein the injection apparatus (150; 250; 350) releases the protective gas in a clocked way.

12. Method according to claim 11, wherein a plurality of transport elements (170) are moved by means of the long stator linear drive (185) in a way that the transported containers (110) are placed in a group (120) below a respective number of injections nozzles (251; 351) of the injection apparatus (250; 350) for simultaneous injection of the protective gas into the containers.

13. Use of a transport system (100) with a closed transport track, at which a plurality of individually controllable transport elements (170) for transporting at least one container (110) are arranged movably, and a long stator linear drive (185) for driving the transport elements, in a container treatment plant (15), in order to transport containers (110) filled with a liquid food by means of a filler (19) to a closer (22),
**characterized in that**
at the transport track an injection apparatus (150; 250; 350) for introducing a protective gas into the filled containers (110) is arranged,
that the injection apparatus (150; 250; 350) has at least one injection nozzle (151; 251; 351) for injecting the protective gas into an opening of the containers, and
that furthermore a control and/or regulating unit (140) is provided, which is configured to move the transport elements (170) with reduced velocity past the at least one injection nozzle or to temporarily stop at the at least one injection nozzle.

## Revendications

1. Dispositif pour introduire un gaz protecteur dans des récipients (2, 110), en particulier dans des bouteilles, comprenant :
un système de transport (100) avec un chemin de transport fermé, conçu pour transporter les récipients d'un point de réception à un point de livraison ; et
un dispositif d'injection (150 ; 250 ; 350) qui est agencé sur le chemin de transport et conçu de telle sorte que le gaz protecteur peut être introduit dans les récipients lors du transport des récipients du point de réception au point de livraison ;
**caractérisé en ce que**
le système de transport (100) est conçu au moins entre le point de réception et le point de livraison avec un entraînement par moteur linéaire à stator long (185) pour le déplacement contrôlable individuellement d'une pluralité d'éléments de transport (170) pour les récipients le long du chemin de transport,
le dispositif d'injection (150 ; 250 ; 350) comporte au moins une buse d'injection (151 ; 251 ; 351) pour injecter le gaz protecteur dans une ouverture des récipients, et
une unité de commande et/ou de régulation (140) est en outre pourvue, qui est conçue pour déplacer les éléments de transport (170) à vitesse réduite devant au moins une buse d'injection ou pour les arrêter temporairement au niveau de ladite au moins une buse d'injection.

2. Dispositif selon la revendication 1, dans lequel la buse d'injection (151 ; 251 ; 351) est conçue pour un fonctionnement continu.

3. Dispositif selon la revendication 1, dans lequel la buse d'injection (151 ; 251 ; 351) est conçue pour un fonctionnement cadencé.

4. Dispositif selon la revendication 3, dans lequel une pluralité de buses d'injection (251 ; 351) sont pourvues pour injecter simultanément le gaz protecteur dans un nombre correspondant de récipients (110), et dans lequel les récipients sont agencés au moyen de l'unité de commande et/ou de régulation (140), en particulier en commandant un nombre correspondant d'éléments de transport (170), qui sont disposés en groupes sur la pluralité de buses d'injection.

5. Dispositif selon l'une des revendications précédentes, dans lequel le gaz protecteur est, ou comporte, de l'azote ou du dioxyde de carbone.

6. Dispositif selon l'une des revendications précédentes, dans lequel le système de transport (100) est conçu sous forme d'une étoile de transfert.

7. Installation de manipulation de récipients (15) pour aliments liquides, comprenant :
le dispositif selon l'une des revendications précédentes ;
un dispositif de remplissage (19), en particulier un carrousel de remplissage, pour remplir un aliment liquide dans des récipients (2) ; et
un dispositif de scellement (22) pour sceller les récipients remplis ;
dans lequel ledit dispositif est agencé entre le dispositif de remplissage et le dispositif de scellement.

8. Procédé d'introduction d'un gaz protecteur dans des récipients (2, 110), en particulier dans des bouteilles, comportant les étapes suivantes :
saisie des récipients sur un dispositif de remplissage (19), en particulier sur un carrousel de remplissage ; et
transport des récipients jusqu'à un dispositif de scellement (22) ;
dans lequel le gaz protecteur est introduit dans les récipients transportés au moyen d'un dispositif d'injection (150 ; 250 ; 350),
**caractérisé en ce que**
les récipients sont transportés au moins dans la zone du dispositif d'injection au moyen d'une pluralité d'éléments de transport (170) pouvant être commandés individuellement et entraînés via un entraînement par moteur linéaire à stator long (185), et
les éléments de transport (170) pour l'introduction du gaz protecteur sont déplacés à vitesse réduite devant le dispositif d'injection (150 ; 250 ; 350) ou sont temporairement arrêtés au niveau du dispositif d'injection.

9. Procédé selon la revendication 8, comprenant en outre les étapes suivantes :
remplissage des récipients avec un aliment liquide à l'aide du dispositif de remplissage (19) ;
transfert des récipients jusqu'au dispositif de scellement (22) après introduction du gaz protecteur ; et
fermeture des récipients avec un élément de fermeture.

10. Procédé selon l'une des revendications 8 et 9, dans lequel le dispositif d'injection (150 ; 250 ; 350) délivre le gaz protecteur en continu.

11. Procédé selon l'une des revendications 8 et 9, dans lequel le dispositif d'injection (150 ; 250 ; 350) délivre le gaz protecteur de manière cadencée.

12. Procédé selon la revendication 11, dans lequel plusieurs éléments de transport (170) sont déplacés au moyen de l'entraînement par moteur linéaire à stator long (185) de telle sorte que les récipients transportés (110) formant un groupe (120) sont placés sous un nombre correspondant de buses d'injection (251 ; 351) du dispositif d'injection (250 ; 350) pour une injection simultanée du gaz protecteur dans les récipients.

13. Utilisation d'un système de transport (100) avec un chemin de transport fermé, sur lequel sont montés de manière mobile plusieurs éléments de transport (170) pouvant être commandés individuellement pour transporter au moins un récipient (110), et avec un entraînement par moteur linéaire à stator long (185) pour entraîner les éléments de transport, dans une installation de manipulation de récipients (15), pour transporter des récipients (110) remplis d'un aliment liquide au moyen d'un dispositif de remplissage (19) jusqu'à un dispositif de scellement (22),
**caractérisée en ce que**
un dispositif d'injection (150 ; 250 ; 350) pour introduire un gaz protecteur dans les récipients remplis (110) est agencé sur le chemin de transport,
le dispositif d'injection (150 ; 250 ; 350) comporte au moins une buse d'injection (151 ; 251 ; 351) pour injecter le gaz protecteur dans une ouverture des récipients, et
une unité de commande et/ou de régulation (140) est en outre pourvue, qui est conçue pour déplacer les éléments de transport (170) à vitesse réduite devant au moins une buse d'injection ou pour les arrêter temporairement au niveau de ladite au moins une buse d'injection.
